# EUROPEAN PATENT SPECIFICATION

(11) **EP 2 373 119 B1**
(45) Date of publication and mention of the grant of the patent: **19.07.2017**
(21) Application number: 08879271.8
(22) Date of filing: 30.12.2008
(51) Int. Cl.: H05B 6/10, C21D 9/30, C21D 1/42

(54) **INDUCTION TEMPERING SYSTEM FOR PARTS IN WHICH THE CENTRE OF MASSES DOES NOT COINCIDE WITH THE CENTRE OF ROTATION**
INDUKTIONSTEMPERSYSTEM FÜR TEILE, IN DENEN DER MASSENSCHWERPUNKT NICHT MIT DEM DREHZENTRUM ZUSAMMENFÄLLT
SYSTÈME DE TREMPE PAR INDUCTION POUR PIÈCES DANS LESQUELLES LE CENTRE DE GRAVITÉ NE COÏNCIDE PAS AVEC LE CENTRE DE ROTATION

(43) Date of publication of application: 05.10.2011
(73) Proprietor: GH Electrotermia, S.A., 46184 San Antonio de Benageber (Valencia) (ES)
(72) Inventor: JORDÁN MARTÍNEZ, José, E-46184 San Antonio de Benagéber (Valencia) (ES); MORATALLA MARTÍNEZ, Pedro, E-46184 San Antonio de Benagéber (Valencia) (ES); ESTEVE GÓMEZ, Vicente, E-46184 San Antonio de Benagéber (Valencia) (ES); DEDE GARCÍA-SANTAMARÍA, Enrique, E-46184 San Antonio de Benagéber (Valencia) (ES); MEZQUIDA GISBERT, Miguel, E-46184 San Antonio de Benagéber (Valencia) (ES); DURÁN SÁNCHEZ, Manuel, E-46184 San Antonio de Benagéber (Valencia) (ES)
(74) Representative: Ungria López, Javier
(86) International application number: PCT/ES2008/000813
(87) International publication number: WO 2010/076345

(56) References cited:
- EP-A1- 0 366 862
- EP-A1- 0 366 862
- EP-A2- 0 168 130
- DE-C1- 3 836 268
- ES-T3- 2 044 543
- ES-T3- 2 044 543
- US-A- 4 538 041
- US-A- 4 538 041
- US-A- 4 538 041

## Description

### OBJECT OF THE INVENTION

The present invention, in accordance with the explanation given in the present description, relates to a hardening or induction heating system which is able to temper pieces without there being any rotation movement of the same. This original hardening system basically consists of an output transformer which is able to transfer the necessary energy for hardening without there being any physical union between the primary and the secondary winding of said transformer with a fixed primary winding and a secondary winding with synchronous movement with a heating inductor, through a mechanical system which is able to provide linear and angular movement of the assembly formed by the secondary winding of the transformer (5) and the inductor (3), a transmission axis (8) with the ability for both showering and for refrigeration, and an inductor which will be responsible for transferring the energy that the piece needs for hardening.

Using the system object of the present invention, the hardening system can be made independent from the type of piece to be tempered, given that it contains both the heating inductor and the necessary movement to carry out the hardening. By making the hardening system independent from the type of piece, two major advances are achieved, on the one hand the improvement in the quality of some hardening, and on the other the possibility of carrying out hardening with cylindrical movement where before it could not be done.

By means of this system it is possible to improve the quality of the hardening of the pieces which requires hardening with cylindrical symmetry in an area far from the centre of mass of the piece; the rotation of the piece about an axis far from the centre of mass generates heavy vibrations in the machine and limits rotation speeds of the piece, due to which hardening is carried out at low revolutions. These low revolutions imply low power density in the inductor, increasing the cycle time of the hardening process. The system object of the present invention allows hardening to be carried out with cylindrical symmetry in pieces where the centre of mass has a relative movement with respect to the hardening area during the whole hardening process. This type of hardening has not been possible up to now with cylindrical symmetry.

### BACKGROUND OF THE INVENTION

Hardening processes are currently carried out by means of the rotation of the piece, with the inductor remaining static. This method has a good performance when the radius of the piece is equal or lower than the radius of the inductor, however, it is a method that requires large machines and large motors in the case of hardening a small piece on a large piece. Using these methods adequate hardening can be obtained within defined specifications. However, if the hardening requirements are very strict, if both the rotation speed and the position of the piece have to extraordinarily exact, as a result the complexity of the machine increases as the size of the piece to be tempered increases. The arts most similar to movement of the inductor with respect to the piece are shown below:
- Inductors and crankshaft hardening, where the inductor tries to follow the piece on one plane, in an upward and downward direction and the other forward and backward, when the crankshaft performs a rotation movement, and each crankshaft performs a translation about its own axis, whose radius depends on the size of the crankshaft. In relation to these types of inductors which have a certain liberty of movement to follow the piece while it is performing rotation movements it is worth mentioning the state of the art US 3,967,089 "Apparatus for the inductive hardening of workpieces rotatable around a rotational axis", and also US4,538,041 "Rotating induction heating apparatus". Document DE 3836268 "Hardening installation comprising a low-induction suspension gear" could also be mentioned.
- Hardening inductors for valve seats. These inductors have a vertical upward movement to allow the piece to fit in its place, once the inductors lower, they do so until contact with the piece is made, later a rising movement is made of very few tenths of a millimetre (for adjustable height). Using these types of inductors the exact position is looked for, independent of what the height of the piece to be tempered may be. In relation to these types of inductors which are positioned about one point of the piece it is worth mentioning state of the art US 3,789,180 "Modified inductor for inductively heating valve seats", and also US 4,700,036 "Induction heating device with improved locking mechanism for slidable inductors".

### DESCRIPTION OF THE INVENTION

The present invention consists of an induction heating system which is basically composed of the following elements: an output transformer, a heating inductor (3), a system of motors (6), and a transmission axis (8) which joins the system of motors to the mobile inductor-secondary winding assembly.

The output transformer is formed by a primary winding (4) which is joined only to the condenser bank (1) and which remains stationary, and a secondary winding (5) which is joined to the inductor (3) and which has no physical contact with the primary winding. The secondary winding of the transformer (5) is physically separated from the primary winding (4) which allows it mobility. The primary winding of the output transformer (4) is formed by one or more coils (10), which can have a fixed or variable relation. The secondary winding of the output transformer is formed by one or more fixed relation coils and whose ends are joined by special connections to the hardening inductor (3). The connections (11) between the secondary winding of the output transformer and the inductor have a triangular shape to maintain the density of the current constant through said connections. As with the coils of the output transformer they are divided into two parts, the same occurs with the core of the transformer. The first part of the core of the output transformer (12), also called the primary core, is physically joined to the primary winding of the said transformer, and as such, remains stationary and joined to the condensers. The core of the output transformer has a second part which is mobile (13), also called secondary core, and which is joined to the coils of the secondary winding. The length of the core is found in the part of the primary winding of the output transformer (12) depends on the linear movement which is required along the length of the longitudinal axis of symmetry of the inductor-secondary winding assembly. The total length of the core which is found in the part of the primary winding must be at least 1.5 cm longer in each part than the linear movement which the inductor is going to make to carry out longitudinal hardening. The longer the length of the core of the primary winding the lower the leakage inductance presented by the transformer, and as a result, it will be able to transfer greater power. The length of the core which is joined to the secondary winding of the output transformer does not depend on the linear movement which the inductor is going to carry out, however it must be at least 1.5 cm longer in each part than the coils of the secondary winding. The degree to which the length of the core exceeds the coils of the secondary winding defines the leakage inductance of this transformer. The greater the length the lower the leakage inductance of the transformer will be and the greater the power it will be capable to transfer. The second part of the core of the secondary winding of the output transformer (12) must have a central orifice, through which have to pass both the transmission axis (8) which joins the part of the motors with the inductor-secondary winding assembly (5), and the electrical connections (11) between the secondary winding (5) and the inductor (3). These electrical connections between the secondary winding and the inductor are carried out through the interior of the secondary winding and are triangular shaped to maintain the current density constant. The secondary winding (5) of the output transformer and its corresponding core (13) must have cylindrical symmetry and the centre of mass must be situated in the longitudinal axis of symmetry of the secondary winding.

The hardening inductor has a shape which depends on the piece (9) which is going to be treated and the only requirements with which it must comply are that it has the most cylindrical symmetry possible and that its centre of mass is found in the longitudinal axis of symmetry of the secondary winding.

The mobility of the system, both the linear movement along the length of the longitudinal axis of symmetry and the rotation about said axis, is provided by the motors using two motors, one which carries out the angular movement and the other the linear movement. These two motors have to allow variation both in the linear speed and the angular speed.

The transmission of the movement from the motors to the assembly formed by the secondary winding of the output transformer and the hardening inductor is carried out by means of a transmission axis (8). This transmission axis (8) must transfer the movement of the motors and also drive both the refrigeration water of the secondary winding of the transformer and the inductor as well as the shower needed to carry out the hardening. This transmission axis (8) contains the necessary joints to allow the passage of the water from a system which is static until the transmission axis (8) rotates.

The separation necessary between the primary winding (4) of the transformer and the secondary winding (5) of the transformer - so that rotational movement can be produced in the inductor-secondary winding assembly with respect to the primary winding - is comprised between 0.1 mm and 100 mm, preferably between 0.5 mm and 10 mm, and more preferably between 1 mm and 3 mm.

### DESCRIPTION OF THE DRAWINGS

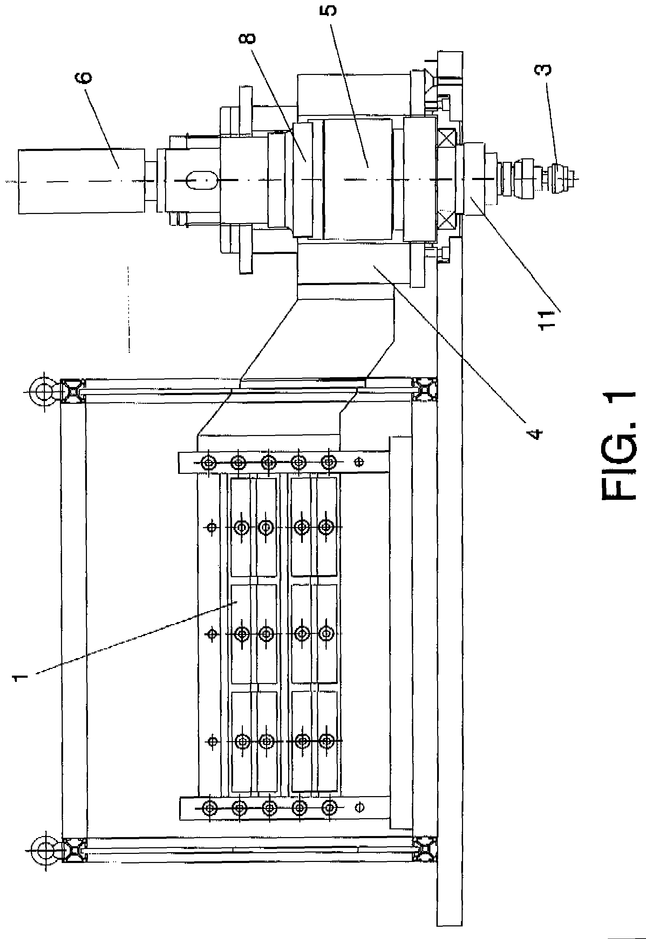

Figure 1.- Represents the diagram of elements which form the assembly of the system object of the present invention. The assembly is formed by the primary winding of the output transformer (4) joined only to the condensers (1), the secondary winding of the output transformer (5) which is joined only through the transmission axis (8) to the motors (6) and to the inductor (3) through the output connections (11).

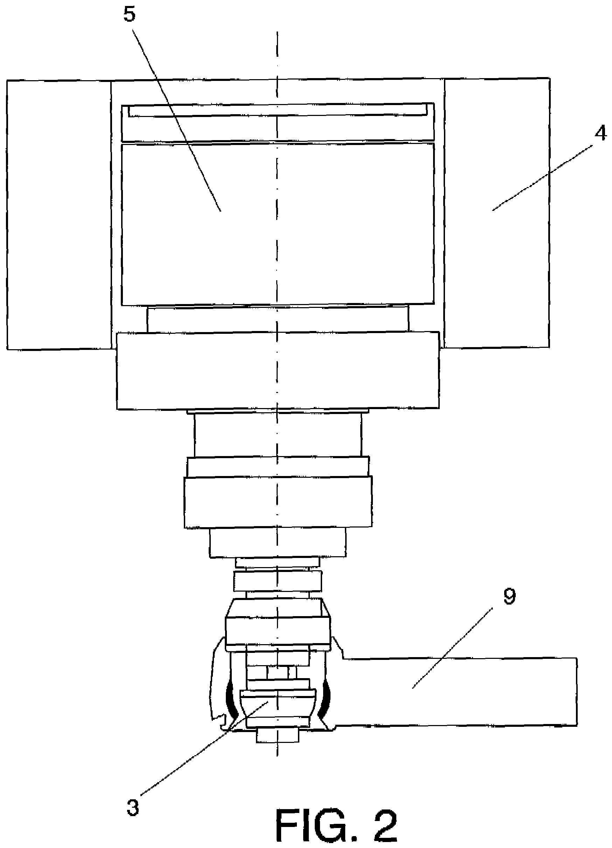

Figure 2. - Represents the assembly formed by the primary winding of the output transformer (4), the secondary winding of the output transformer (5), the inductor (3) and the piece (9).

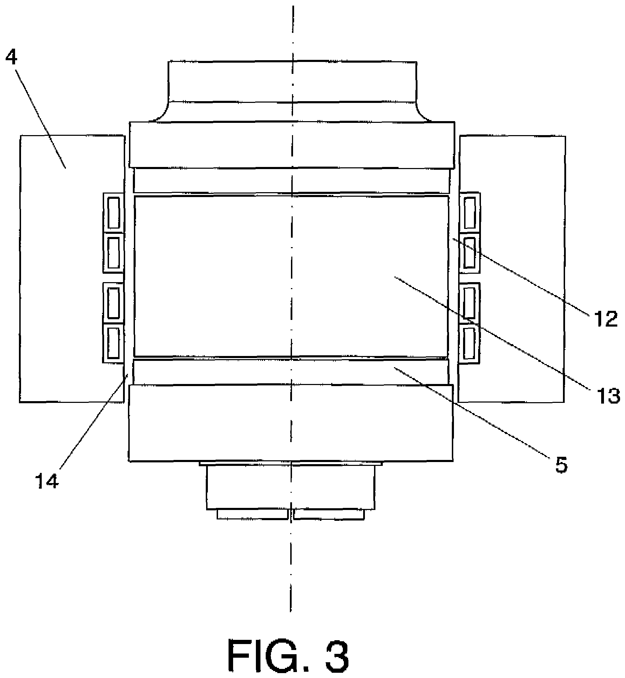

Figure 3. - Shows a cross section of the output transformer, part of the present invention, where it is possible to appreciate the separation (14) which exists between the primary winding of the transformer (4), the secondary winding of the transformer (5). The lines of the magnetic field pass through the air gap which exists between the core of the primary winding of the transformer (12) and the core of the secondary winding of the transformer (13).

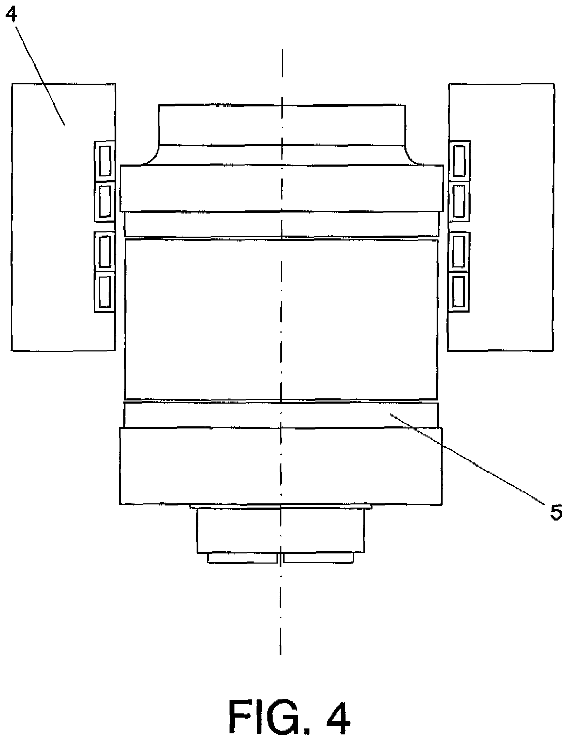

Figure 4. - Shows the same cross section of the output transformer in figure 3, part of the present invention, but with a longitudinal movement along the length of the longitudinal axis of symmetry of the secondary winding of said transformer, where it is possible to appreciate the primary winding of the transformer (4) and the secondary winding of the transformer (5).

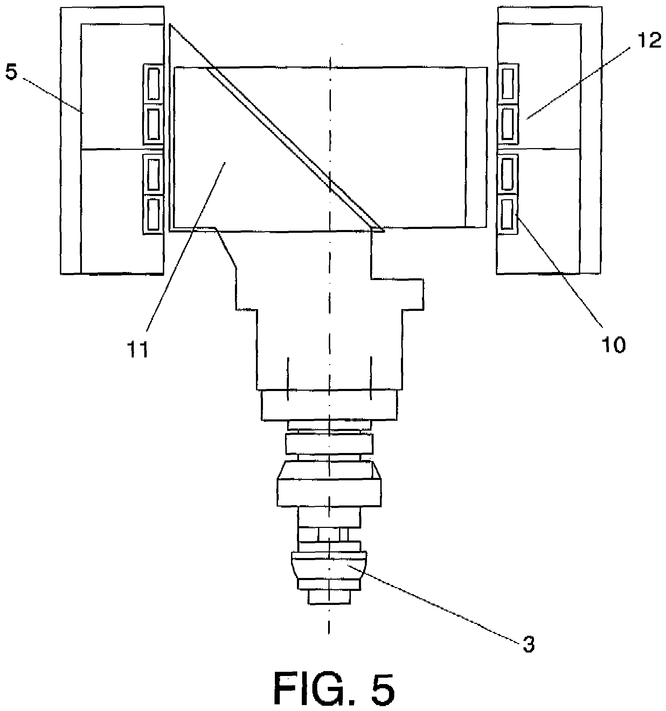

Figure 5. - Shows the connection (11) between the secondary winding of the output transformer (5) and the inductor (3). This connection has a triangular area to maintain the current density constant along the length of the connection in the interior of the secondary winding of the transformer (5). It is possible to appreciate the core of the primary winding of the transformer (12) and the coils of the primary winding of the transformer (10).

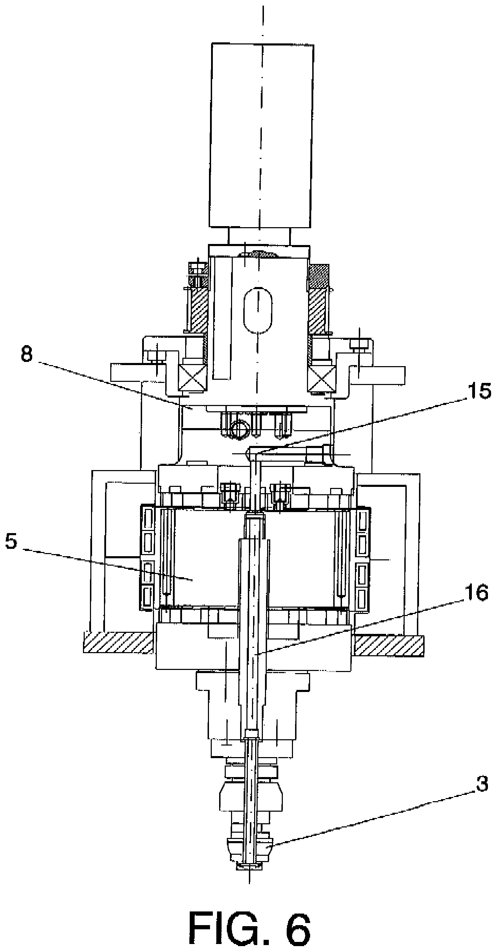

Figure 6. - Shows a cross section of the transmission axis (8) of the movement between the motors and the secondary winding of the transformer (5). It is possible to appreciate the holes (15) which have been made in the interior of the transmission axis (8) in order to refrigerate both the secondary winding of the transformer (5) and the inductor (3) as well as the hole for the shower water (16).

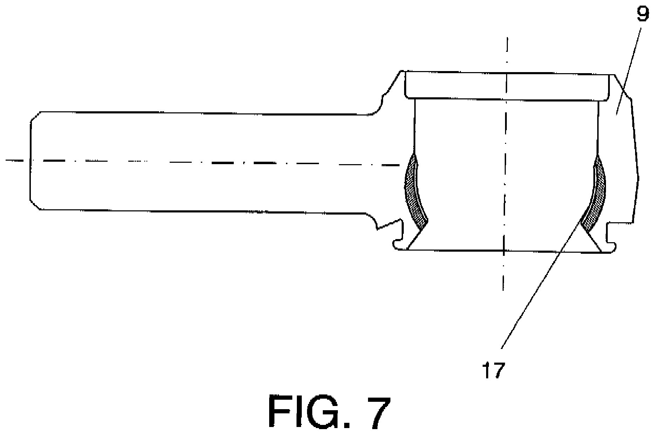

Figure 7. - Shows an example of a piece (9) which is going to be tempered
   following the method of the present invention. The hardening area is found in the interior of the mechanised area (17).

### DESCRIPTION OF AN EMBODIMENT OF THE INVENTION

Carried out below will be the description of the system developed by way of an example of the hardening of a piece, figure 7, where the movement of rotation of said piece is complex as it does not have the centre of mass in the symmetry axis of the hardening area.

The area for hardening the piece is in the interior of the mechanised cylinder. This cylinder is found in one of the ends of the piece, while the centre of mass of the same is found approximately in the middle of its length. To carry out the hardening adequately using the systems used up until now, the piece must rotate about the longitudinal axis of the cylinder which must be tempered, such that its centre of mass will perform a translation movement about this axis. If the piece does not rotate the cylindrical asymmetry of the inductor will be reflected in the hardening area. These cylindrical asymmetries are unavoidable since the inductor needs to have two electrical connections at it ends. This asymmetry in the connections must be applied to the outline of the piece. This distribution of the asymmetry is achieved by means of the rotation of the piece with respect to the inductor (3).

Through use of the system object of the present invention hardening can be carried out without the piece making any movement. Simply position the piece in the inductor and begin a rotational movement of the secondary winding of the transformer which is contained only by the hardening inductor about the longitudinal axis of the cylinder of the part which is going to be tempered which coincides with the longitudinal axis of the inductor-secondary winding assembly. The rotation of the inductor-secondary winding assembly has the same effect as the rotation of the piece, given that this movement is necessary in order that the asymmetry of the inductor does not appear in the piece. The rotation of the inductor-secondary winding assembly is carried out about the longitudinal axis which is contained at its centre of mass, as such vibrations do not occur due to translation movements. From the point of view of hardening the quality of the same can be improved given that the rotation speed of the inductor-secondary winding assembly could be greater than that of the piece.

If the area to be tempered were greater than the area affected by the inductor a longitudinal movement would be made along the length of the longitudinal axis of symmetry of the inductor-secondary winding assembly to carry out hardening named "al desfile" (the piece to be tempered moves to the inductor or vice versa, in each movement of the hardening only part of the process only part of the piece is under the influence of the inductor. A rapid cooling is essential).

The core of the transformer of the secondary winding is manufactured with "I" type ferrites, leaving a necessary separation (14) between the primary winding of the transformer (4) and the secondary winding of the transformer (5) of between 1 mm and 3 mm so that the rotation movement of the secondary winding of the transformer can be produced. The relation of the output transformer is fixed in this example and the primary winding is formed by two coils and the secondary winding by one.

## Claims

1. Induction hardening system for pieces in which the centre of mass does not coincide with the centre of rotation, which at least comprises:
- a hardening station,
- mechanical means of rotation and longitudinal displacement of an inductor (3), and
- a transmission axis (8),
said hardening station at least comprises:
- a condenser assembly (1) formed by at least one condenser,
- an output transformer (2), and
- the inductor (3),
where the output transformer (2) comprises a primary winding of said output transformer (4) and a secondary winding of said output transformer (5); wherein:
- the inductor (3) and the secondary winding of the output transformer (5) are joined only to each other and form a inductor-secondary winding assembly separated from the primary winding of the output transformer (4), and
- the inductor-secondary winding assembly comprises at least one of the options selected by the group consisting of in a rotation movement about a rotation axis which coincides with the longitudinal symmetry of the inductor-secondary winding assembly, a linear movement along the length of the rotation axis of the inductor-secondary winding assembly, and a combination of both movements simultaneously, the primary winding of the output transformer (5) remaining stationary;
**characterized in that**:
the secondary winding of the output transformer (5) is formed by at least one of the options selected from the group consisting of a coil and more than one coil (10), which have a fixed relation and whose ends are joined through connections (11) to the inductor (3), wherein said connections (11) comprise a triangular shape which allow maintaining a constant current density through said connections (11) between the coils of the secondary winding of the output transformer (5) and the inductor (3).

2. Induction hardening system for parts in which the centre of mass does not coincide with the centre of rotation, according to claim 1, **characterised in that** the rotation movement about the rotation axis and the linear movement along the length of the rotation axis of the inductor-secondary winding assembly is carried out by means of motors, said motors being joined to the inductor-secondary winding assembly by a transmission axis (8).

3. Induction hardening system for parts in which the centre of mass does not coincide with the centre of rotation, according to claim 2, **characterised in that** the rotation movement about the rotation axis of the rotation axis of the inductor-secondary winding assembly is defined by the rotation speed.

4. Induction hardening system for parts in which the centre of mass does not coincide with the centre of rotation, according to claim 3, **characterised in that** the rotation speed of the inductor-secondary winding assembly is a variable parameter.

5. Induction hardening system for parts in which the centre of mass does not coincide with the centre of rotation, according to claim 2, **characterised in that** the linear movement of the inductor-secondary winding assembly along the length of the rotation axis is defined by the linear speed.

6. Induction hardening system for parts in which the centre of mass does not coincide with the centre of rotation, according to claim 5, **characterised in that** the linear speed of the inductor-secondary winding assembly is a variable parameter.

7. Induction hardening system for parts in which the centre of mass does not coincide with the centre of rotation, according to claim 1, **characterised in that** the primary winding of the transformer (4) is formed by at least one of the options selected from the group consisting of a coil and more than one coil (10), which have one of the relation options selected between a fixed relation and a variable relation.

8. Induction hardening system for parts in which the centre of mass does not coincide with the centre of rotation, according to claim 1, **characterised in that** the output transformer (2) comprises a core of the transformer divided into two parts, a core of the primary winding (12) and a core of the secondary winding (13).

9. Induction hardening system for parts in which the centre of mass does not coincide with the centre of rotation, according to claim 8, **characterised in that** the core of the primary winding (12) is physically joined to the primary winding of the transformer (4) and to the condenser assembly (1).

10. Induction hardening system for parts in which the centre of mass does not coincide with the centre of rotation, according to claim 8, **characterised in that** the core of the secondary winding (13) is physically joined to the coils and rotates jointly with the secondary winding-inductor assembly.

11. Induction hardening system for parts in which the centre of mass does not coincide with the centre of rotation, according to claim 1, **characterised in that** the secondary winding-inductor assembly has cylindrical symmetry.

12. Induction hardening system for parts in which the centre of mass does not coincide with the centre of rotation, according to claim 11, **characterised in that** the centre of mass of the secondary winding-inductor assembly is found in a point of the rotation axis.

13. Induction hardening system for parts in which the centre of mass does not coincide with the centre of rotation, according to claim 1, **characterised in that** the transmission axis (8) contains at least one pipe to refrigerate the inductor (3) and the secondary winding of the transformer (5).

14. Induction hardening system for parts in which the centre of mass does not coincide with the centre of rotation, according to claim 9, **characterised in that** the core of the primary winding (12) comprises a greater length than the maximum distance which the inductor makes in its longitudinal movement for hardening the piece (9), preferably greater than the maximum distance which the inductor makes in its longitudinal movement for hardening the piece (9) by at least 1.5 mm

15. Induction hardening system for parts in which the centre of mass does not coincide with the centre of rotation, according to claim 10, **characterised in that** the core of the secondary winding (13) comprises a greater length than the length of the coils of the secondary winding, preferably 1.5 mm greater than the length of the coils of the secondary winding.

16. Induction hardening system for parts in which the centre of mass does not coincide with the centre of rotation, according to any of the claims 14 and 15, **characterised in that** the greater the length of the core of the primary winding (12) and the core of the secondary winding (13), the greater the coupling between them will be and, as a result, the greater the power transmission.

17. Induction hardening system for parts in which the centre of mass does not coincide with the centre of rotation, according to claim 1, **characterised in that** the separation between the primary winding (4) of the transformer and the secondary winding (5) of the transformer is comprised between 0.1 mm and 100 mm, preferably between 0.5 mm and 10 mm, and more preferably between 1 mm and 3 mm.

## Patentansprüche

1. Induktionshärtungssystem für Stücke, bei denen der Schwerpunkt nicht mit dem Rotationszentrum zusammenfällt, das mindestens umfasst:
- eine Härtungsstation,
- mechanische Einrichtung zur Drehung und Längsverschiebung eines Induktors (3), und
- eine Transmissionsachse (8), wobei
die Härtungsstation zumindest umfasst:
- eine Kondensorbaueinheit (1), die durch zumindest einen Kondensor gebildet ist,
- einen Ausgangstransformator (2), und
- den Induktor (3),
wobei der Ausgangstransformator (2) eine Primärwicklung des Ausgangstransformators (4) und eine Sekundärwicklung des Ausgangstransformators (5) umfasst; wobei
- der Induktor (3) und die Sekundärwicklung des Ausgangstransformators (5) nur miteinander verbunden sind und eine Induktor-Sekundärwicklungsbaueinheit bilden, die von der Primärwicklung des Ausgangstransformators (4) getrennt ist, und
- die Induktor-Sekundärwicklungsbaueinheit mindestens eine der Optionen besitzt, die aus der Gruppe ausgewählt sind, die aus einer Drehbewegung um eine Rotationsachse, die mit der Längssymmetrie der Induktor-Sekundärwicklungsbaueinheit zusammenfällt, einer linearen Bewegung in der Länge der Rotationsachse der Induktor-Sekundärwicklungsbaueinheit, und einer Kombination beider Bewegungen gleichzeitig besteht, wobei die Primärwicklung des Ausgangstransformators (5) stationär bleibt;
**dadurch gekennzeichnet, dass**:
die Sekundärwicklung des Ausgangstransformators (5) durch mindestens eine der Optionen gebildet wird, die aus der Gruppe ausgewählt ist, die aus einer Spule und mehr als einer Spule (10) besteht, die eine festgelegte Beziehung haben und deren Enden durch Verbindungen (11) mit dem Induktor (3) verbunden sind, wobei die Verbindungen (11) eine dreieckige Form aufweisen, die es erlaubt, eine konstante Stromdichte durch die Verbindungen (11) zwischen den Spulen der Sekundärwicklung des Ausgangstransformators (5) und dem Induktor (3) aufrechtzuerhalten.

2. Induktionshärtungssystem für Teile, bei denen der Schwerpunkt nicht mit dem Rotationszentrum zusammenfällt, nach Anspruch 1, **dadurch gekennzeichnet, dass** die Drehbewegung um die Rotationsachse und die lineare Bewegung in der Länge der Rotationsachse der Induktor-Sekundärwicklungsbaueinheit durch Motoren ausgeführt wird, wobei die Motoren durch eine Übertragungsachse (8) mit der Induktor-Sekundärwicklungsbaueinheit verbunden sind.

3. Induktionshärtungssystem für Teile, bei denen der Schwerpunkt nicht mit dem Rotationszentrum zusammenfällt, nach Anspruch 2, **dadurch gekennzeichnet, dass** die Drehbewegung um die Rotationsachse der Rotationsachse der Induktor-Sekundärwicklungsbaueinheit durch die Drehzahl definiert ist.

4. Induktionshärtungssystem für Teile, bei denen der Schwerpunkt nicht mit dem Rotationszentrum zusammenfällt, nach Anspruch 3, **dadurch gekennzeichnet, dass** die Drehzahl der Induktor-Sekundärwicklungsbaueinheit ein veränderlicher Parameter ist.

5. Induktionshärtungssystem für Teile, bei denen der Schwerpunkt nicht mit dem Rotationszentrum zusammenfällt, nach Anspruch 2, **dadurch gekennzeichnet, dass** die lineare Bewegung der Induktor-Sekundärwicklungsbaueinheit entlang der Länge der Rotationsachse durch die lineare Geschwindigkeit definiert ist.

6. Induktionshärtungssystem für Teile, bei denen der Schwerpunkt nicht mit dem Rotationszentrum zusammenfällt, nach Anspruch 5, **dadurch gekennzeichnet, dass** die lineare Geschwindigkeit der Induktor-Sekundärwicklungsbaueinheit ein veränderlicher Parameter ist.

7. Induktionshärtungssystem für Teile, bei denen der Schwerpunkt nicht mit dem Rotationszentrum zusammenfällt, nach Anspruch 1, **dadurch gekennzeichnet, dass** die Primärwicklung des Transformators (4) durch mindestens eine der Optionen gebildet wird, die aus der Gruppe ausgewählt ist, die aus einer Spule und mehr als einer Spule (10) besteht, die eine der Beziehungsoptionen aufweisen, die zwischen einer festgelegten Beziehung und einer veränderlichen Beziehung ausgewählt sind.

8. Induktionshärtungssystem für Teile, bei denen der Schwerpunkt nicht mit dem Rotationszentrum zusammenfällt, nach Anspruch 1, **dadurch gekennzeichnet, dass** der Ausgangstransformator (2) einen Kern des Transformators aufweist, der in zwei Teile geteilt ist, einen Kern der Primärwicklung (12) und einen Kern der Sekundärwicklung (13).

9. Induktionshärtungssystem für Teile, bei denen der Schwerpunkt nicht mit dem Rotationszentrum zusammenfällt, nach Anspruch 8, **dadurch gekennzeichnet, dass** der Kern der Primärwicklung (12) physikalisch mit der Primärwicklung des Transformators (4) und mit der Kondensorbaueinheit (1) verbunden ist.

10. Induktionshärtungssystem für Teile, bei denen der Schwerpunkt nicht mit dem Rotationszentrum zusammenfällt, nach Anspruch 8, **dadurch gekennzeichnet, dass** der Kern der Sekundärwicklung (13) physikalisch mit den Spulen verbunden ist und mit der Sekundärwicklungs-Induktorbaueinheit gemeinsam rotiert.

11. Induktionshärtungssystem für Teile, bei denen der Schwerpunkt nicht mit dem Rotationszentrum zusammenfällt, nach Anspruch 1, **dadurch gekennzeichnet, dass** die Sekundärwicklungs-Induktorbaueinheit zylindrische Symmetrie besitzt.

12. Induktionshärtungssystem für Teile, bei denen der Schwerpunkt nicht mit dem Rotationszentrum zusammenfällt, nach Anspruch 11, **dadurch gekennzeichnet, dass** der Schwerpunkt der Sekundärwicklungs-Induktorbaueinheit in einem Punkt der Rotationsachse gefunden wird.

13. Induktionshärtungssystem für Teile, bei denen der Schwerpunkt nicht mit dem Rotationszentrum zusammenfällt, nach Anspruch 1, **dadurch gekennzeichnet, dass** die Transmissionsachse (8) mindestens ein Rohr zum Abkühlen des Induktors (3) und der Sekundärwicklung des Transformators (5) enthält.

14. Induktionshärtungssystem für Teile, bei denen der Schwerpunkt nicht mit dem Rotationszentrum zusammenfällt, nach Anspruch 9, **dadurch gekennzeichnet, dass** der Kern der Primärwicklung (12) eine größere Länge als den maximalen Abstand, den der Induktor bei seiner Längsbewegung zum Härten des Stücks (9) herstellt, vorzugsweise größer als den maximalen Abstand, den der Induktor bei seiner Längsbewegung zum Härten des Stücks (9) herstellt, um mindestens 1,5 mm umfasst.

15. Induktionshärtungssystem für Teile, bei denen der Schwerpunkt nicht mit dem Rotationszentrum zusammenfällt, nach Anspruch 10, **dadurch gekennzeichnet, dass** der Kern der Sekundärwicklung (13) eine größere Länge als die Länge der Spulen der Sekundärwicklung, vorzugsweise 1,5 mm größer als die Länge der Spulen der Sekundärwicklung, aufweist.

16. Induktionshärtungssystem für Teile, bei denen der Schwerpunkt nicht mit dem Rotationszentrum zusammenfällt, nach einem der Ansprüche 14 und 15, **dadurch gekennzeichnet, dass** je größer die Länge des Kerns der Primärwicklung (12) und des Kerns der Sekundärwicklung (13) ist, desto größer die Kopplung zwischen ihnen sein wird, und im Ergebnis die Leistungsübertragung desto größer ist.

17. Induktionshärtungssystem für Teile, bei denen der Schwerpunkt nicht mit dem Rotationszentrum zusammenfällt, nach Anspruch 1, **dadurch gekennzeichnet, dass** die Trennung zwischen der Primärwicklung (4) des Transformators und der Sekundärwicklung (5) des Transformators zwischen 0,1 mm und 100 mm, vorzugsweise zwischen 0,5 mm und 10 mm und besser zwischen 1 mm und 3 mm umfasst.

## Revendications

1. Système de trempe par induction pour pièces dans lesquelles le centre de gravité ne coïncide pas avec le centre de rotation, qui comprend au moins :
- une station de trempe,
- des moyens mécaniques de rotation et de déplacement longitudinal d'un inducteur (3), et
- un axe de transmission (8),
ladite station de trempe comprenant au moins :
- un ensemble condensateur (1) formé par au moins un condensateur,
- un transformateur de sortie (2), et
- l'inducteur (3),
le transformateur de sortie (2) comprenant un enroulement primaire (4) dudit transformateur de sortie et un enroulement secondaire (5) dudit transformateur de sortie ;
dans lequel :
- l'inducteur (3) et l'enroulement secondaire (5) du transformateur de sortie sont reliés uniquement l'un à l'autre et forment un ensemble inducteur-enroulement secondaire séparé de l'enroulement primaire (4) du transformateur de sortie, et
- l'ensemble inducteur-enroulement secondaire comprend au moins une des options choisies dans le groupe constitué par un mouvement de rotation autour d'un axe de rotation qui coïncide avec la symétrie longitudinale de l'ensemble inducteur-enroulement secondaire, un mouvement linéaire le long de l'axe de rotation de l'ensemble inducteur-enroulement secondaire, et une combinaison des deux mouvements simultanément, l'enroulement primaire (5) du transformateur de sortie demeurant stationnaire ;
**caractérisé en ce que** :
l'enroulement secondaire (5) du transformateur de sortie est formé par au moins une des options choisies dans le groupe constitué par une bobine et plusieurs bobines (10), qui ont une relation fixe et dont les extrémités sont reliées à l'inducteur (3) par l'intermédiaire de connexions (11), dans lequel lesdites connexions (11) comprennent une forme triangulaire qui permet de maintenir une densité de courant constante à travers lesdites connexions (11) entre les bobines de l'enroulement secondaire (5) du transformateur de sortie et l'inducteur (3).

2. Système de trempe par induction pour pièces dans lesquelles le centre de gravité ne coïncide pas avec le centre de rotation selon la revendication 1, **caractérisé en ce que** le mouvement de rotation autour de l'axe de rotation et le mouvement linéaire le long de l'axe de rotation de l'ensemble inducteur-enroulement secondaire sont assurés à l'aide de moteurs, lesdits moteurs étant reliés à l'ensemble inducteur-enroulement secondaire par un axe de transmission (8).

3. Système de trempe par induction pour pièces dans lesquelles le centre de gravité ne coïncide pas avec le centre de rotation selon la revendication 2, **caractérisé en ce que** le mouvement de rotation autour de l'axe de rotation de l'ensemble inducteur-enroulement secondaire est défini par la vitesse de rotation.

4. Système de trempe par induction pour pièces dans lesquelles le centre de gravité ne coïncide pas avec le centre de rotation selon la revendication 3, **caractérisé en ce que** la vitesse de rotation de l'ensemble inducteur-enroulement secondaire est un paramètre variable.

5. Système de trempe par induction pour pièces dans lesquelles le centre de gravité ne coïncide pas avec le centre de rotation selon la revendication 2, **caractérisé en ce que** le mouvement linéaire de l'ensemble inducteur-enroulement secondaire le long de l'axe de rotation est défini par la vitesse linéaire.

6. Système de trempe par induction pour pièces dans lesquelles le centre de gravité ne coïncide pas avec le centre de rotation selon la revendication 5, **caractérisé en ce que** la vitesse linéaire de l'ensemble inducteur-enroulement secondaire est un paramètre variable.

7. Système de trempe par induction pour pièces dans lesquelles le centre de gravité ne coïncide pas avec le centre de rotation selon la revendication 1, **caractérisé en ce que** l'enroulement primaire (4) du transformateur est formé par au moins une des options choisies dans le groupe constitué par une bobine et plusieurs bobines (10), qui ont une des options de relation choisies parmi une relation fixe et une relation variable.

8. Système de trempe par induction pour pièces dans lesquelles le centre de gravité ne coïncide pas avec le centre de rotation selon la revendication 1, **caractérisé en ce que** le transformateur de sortie (2) comprend un noyau du transformateur divisé en deux parties, un noyau de l'enroulement primaire (12) et un noyau de l'enroulement secondaire (13).

9. Système de trempe par induction pour pièces dans lesquelles le centre de gravité ne coïncide pas avec le centre de rotation selon la revendication 8, **caractérisé en ce que** le noyau de l'enroulement primaire (12) est physiquement relié à l'enroulement primaire (4) du transformateur et à l'ensemble condensateur (1).

10. Système de trempe par induction pour pièces dans lesquelles le centre de gravité ne coïncide pas avec le centre de rotation selon la revendication 8, **caractérisé en ce que** le noyau de l'enroulement secondaire (13) est physiquement relié aux bobines et tourne conjointement avec l'ensemble inducteur-enroulement secondaire.

11. Système de trempe par induction pour pièces dans lesquelles le centre de gravité ne coïncide pas avec le centre de rotation selon la revendication 1, **caractérisé en ce que** l'ensemble inducteur-enroulement secondaire présente une symétrie cylindrique.

12. Système de trempe par induction pour pièces dans lesquelles le centre de gravité ne coïncide pas avec le centre de rotation selon la revendication 11, **caractérisé en ce que** le centre de gravité de l'ensemble inducteur-enroulement secondaire se situe en un point de l'axe de rotation.

13. Système de trempe par induction pour pièces dans lesquelles le centre de gravité ne coïncide pas avec le centre de rotation selon la revendication 1, **caractérisé en ce que** l'axe de transmission (8) contient au moins un tuyau pour refroidir l'inducteur (3) et l'enroulement secondaire (5) du transformateur.

14. Système de trempe par induction pour pièces dans lesquelles le centre de gravité ne coïncide pas avec le centre de rotation selon la revendication 9, **caractérisé en ce que** le noyau de l'enroulement primaire (12) présente une longueur supérieure à la distance maximale que l'inducteur parcourt dans son mouvement longitudinal pour tremper la pièce (9), de préférence supérieure à la distance maximale que l'inducteur parcourt dans son mouvement longitudinal pour tremper la pièce (9) d'au moins 1,5 mm.

15. Système de trempe par induction pour pièces dans lesquelles le centre de gravité ne coïncide pas avec le centre de rotation selon la revendication 10, **caractérisé en ce que** le noyau de l'enroulement secondaire (13) présente une longueur supérieure à la longueur des bobines de l'enroulement secondaire, de préférence supérieure de 1,5 mm à la longueur des bobines de l'enroulement secondaire.

16. Système de trempe par induction pour pièces dans lesquelles le centre de gravité ne coïncide pas avec le centre de rotation selon l'une quelconque des revendications 14 et 15, **caractérisé en ce que** plus la longueur du noyau de l'enroulement primaire (12) et du noyau de l'enroulement secondaire (13) est grande, plus le couplage entre eux sera grand et, par conséquent, plus la transmission de puissance sera grande.

17. Système de trempe par induction pour pièces dans lesquelles le centre de gravité ne coïncide pas avec le centre de rotation selon la revendication 1, **caractérisé en ce que** l'écartement entre l'enroulement primaire (4) du transformateur et l'enroulement secondaire (5) du transformateur est compris entre 0,1 mm et 100 mm, de préférence entre 0,5 mm et 10 mm, et mieux encore entre 1 mm et 3 mm.
